Europäisches Patentamt

European Patent Office

Office européen des brevets

(11) Veröffentlichungsnummer: **0 343 481**

**A2**

## (12) EUROPÄISCHE PATENTANMELDUNG

(21) Anmeldenummer: **89108717.3**

(22) Anmeldetag: **16.05.89**

(51) Int. Cl.⁴: **H02P 6/02**

(30) Priorität: **21.05.88 DE 3817423**

(43) Veröffentlichungstag der Anmeldung:
**29.11.89 Patentblatt 89/48**

(84) Benannte Vertragsstaaten:
**CH DE ES GB IT LI**

(71) Anmelder: **Standard Elektrik Lorenz Aktiengesellschaft**
**Lorenzstrasse 10**
**D-7000 Stuttgart 40(DE)**

(72) Erfinder: **Feigel, Josef, Dr.**
**Rennweg 76**
**D-8300 Landshut(DE)**
Erfinder: **Schumbrutzki, Walter**
**Feldstrasse 11**
**D-8386 Griesbach(DE)**

(74) Vertreter: **Pohl, Heribert, Dipl.-Ing et al**
**Standard Elektrik Lorenz AG Patent- und Lizenzwesen Postfach 30 09 29**
**D-7000 Stuttgart 30(DE)**

(54) **Vorrichtung und Verfahren zur Steuerung von bürstenlosen 4-strängigen Gleichstrommotoren.**

(57) Bürstenlose 4-strängige Gleichstrommotoren mit einer in Sternschaltung geschalteten Statorwicklung und mit vier Halbleiterschaltern für bipolaren Betrieb sind bekannt. Hier wird ein bürstenloser, 4-strängiger Gleichstrommotor mit einer in Ringschaltung geschalteten Statorwicklung vorgeschlagen. Außerdem werden zwei Steuersequenzen angegeben. Eine erste Steuersequenz mit vier Schaltereignissen pro Umlauf und Polpaarzahl. Bei dieser Steuersequenz sind immer nur zwei Halbleiterschalter aktiviert. Eine zweite Steuersequenz mit aus acht Schaltereignissen pro Umlauf und Polpaarzahl. Abwechselnd sind einmal zwei und einmal drei Halbleiterschalter aktiviert.

FIG.1

EP 0 343 481 A2

## Vorrichtung und Verfahren zur Steuerung von bürstenlosen 4-strängigen Gleichstrommotoren

Die Erfindung betrifft eine Vorrichtung und ein Verfahren zur Steuerung von bürstenlosen, insbesondere 4-strängigen Gleichstrommotoren.

Die zur Umwandlung elektrischer in mechanische Energie mittels Elektromotoren erforderlichen Drehfelder lassen sich mechanisch (Bürsten in Verbindung mit auf dem Rotor angebrachten Kollektoren) oder elektronisch mit Hilfe von Halbleiterschaltern erzeugen. Aus der US-PS 4,484,115 ist ein bürstenloser Gleichstrommotor bekannt, dessen Stator mit einer 7-strängigen Wicklung in Stern- oder Ringschaltung gewickelt ist. Der Rotor des Gleichstrommotors ist mit Permanentmagneten belegt. Der zur Erzeugung eines Drehfeldes erforderliche Strom wird mit Hilfe von Halbleiterschaltern gesteuert, zu deren Ansteuerung ein die Rotorstellung detektierender Positionssensor dient. Jedem Wicklungsstrang sind je zwei Halbleiterschalter zugeordnet, um bipolaren Betrieb zu ermöglichen.

Aus der DE-PS 33 01 801 ist weiterhin bekannt, einen bürstenlosen 4-strängigen Gleichstrommotor in Sternschaltung mit nur vier Halbleiterschaltern anstelle von acht Halbleiterschaltern bipolar zu betreiben.

Der in der US-Patentschrift beschriebene bürstenlose Gleichstrommotor hat den Nachteil, daß zu seiner Ansteuerung pro Strang je ein Paar komplementärer Transistoren erforderlich ist. Dies ist somit eine aufwendige und kostspielige Lösung. Der bürstenlose Gleichstrommotor entsprechend der DE-PS 33 01 801 hat den Nachteil, daß die Ständerwicklungsstränge in Sternschaltung miteinander verschaltet sind. Bei dieser Schaltung der Ständerwicklung läßt sich der Ständer nicht vollautomatisch wickeln, außerdem sind an den Wickelköpfen Lötarbeiten erforderlich. Darüberhinaus werden bei einer solchen Ständerwicklung die Wickelköpfe in axialer Richtung ziemlich groß, was zu zusätzlichen elektrischen Verlusten führt.

Aufgabe der Erfindung ist es, einen preisgünstigen und weitgehend automatisch herstellbaren bürstenlosen Gleichstrommotor und ein Verfahren zu seiner Ansteuerung anzugeben. Diese Aufgabe wird gelöst durch einen Gleichstrommotor mit der Merkmalskombination des ersten Vorrichtungsanspruches sowie durch ein Verfahren mit den Merkmalen der Verfahrensansprüche.

Der erfindungsgemäße bürstenlose Gleichstrommotor hat den Vorteil, daß zur Ansteuerung seiner vier Stränge lediglich vier Halbleiterschalter erforderlich sind. Ein weiterer Vorteil liegt darin, daß die Statorwicklung in Ringschaltung geschaltet ist. Der Stator kann auf diese Weise vollautomatisch bewickelt werden. Lötarbeiten an den Wickelköpfen sind nicht erforderlich und die gesamte Wicklung wird in axialer Richtung kürzer als übliche Statorwicklungen. Ein weiterer Vorteil ist darin zu sehen, daß der Gleichstrommotor mit mehreren Schaltsequenzen angesteuert werden kann.

Ein Ausführungsbeispiel der Erfindung wird im folgenden beschrieben und anhand der Figuren 1 bis 3 näher erläutert. Es zeigen:

Fig. 1 den prinzipiellen Aufbau einer Ansteuerschaltung für einen 4-strängigen, bürstenlosen Gleichstrommotor; Statorwicklung in Ringschaltung,

Fig. 2 Schaltzustände der vier Halbleiterschalter und Stellung des Durchflutungsvektors bei einfacher Kommutierung pro Umlauf und Polpaarzahl,

Fig. 3 Schaltzustände der vier Halbleiterschalter und Stellung des Durchflutungsvektors bei doppelter Kommutierung pro Umlauf und Polpaarzahl.

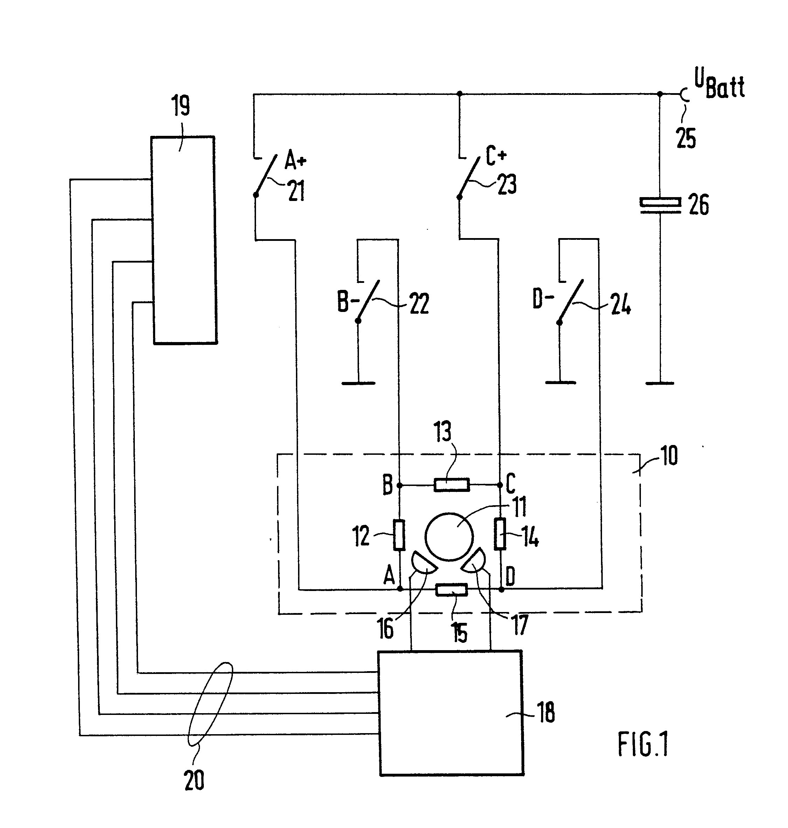

Fig. 1 zeigt den prinzipellen Aufbau einer Ansteuerschaltung für einen 4-strängigen bürstenlosen Gleichstrommotor, dessen Statorwicklung in Ringschaltung geschaltet ist. In einem mit 10 bezeichneten Teilbereich der Fig. 1 sind alle die Elemente enthalten, die zum Gleichstrommotor und nicht zur Ansteuerschaltung gehören. 11 kennzeichnet einen mit permanentmagnetischem Material belegten Rotor, 12, 13, 14 und 15 kennzeichnen die vier Stränge des Stators. Mit 16 und 17 sind zwei Magnetfeldsensoren bezeichnet, die die Stellung des Rotors 11 detektieren. Die beiden Sensoren 16 und 17 sind mit einer Kommutierungsschaltung 18 verbunden. Der Ausgang der Kommutierungsschaltung 18 ist über mit 20 bezeichnete Leitungen mit einer Treiberschaltung 19 verbunden. 21 bezeichnet einen Schalter $A^+$, 22 einen Schalter $B^-$, 23 einen Schalter $C^+$ und 24 einen Schalter $D^-$. Die beiden Schalter $A^+$ und $C^+$ verbinden die Punkte A und C am Motor mit der Versorgungsspannung. Die Schalter $B^-$ und $D^-$ verbinden die Punkte B und D mit der Masse. Mit 25 ist ein Anschluß für die Versorgungsspannung bezeichnet, mit 26 ein Glättungskondensator.

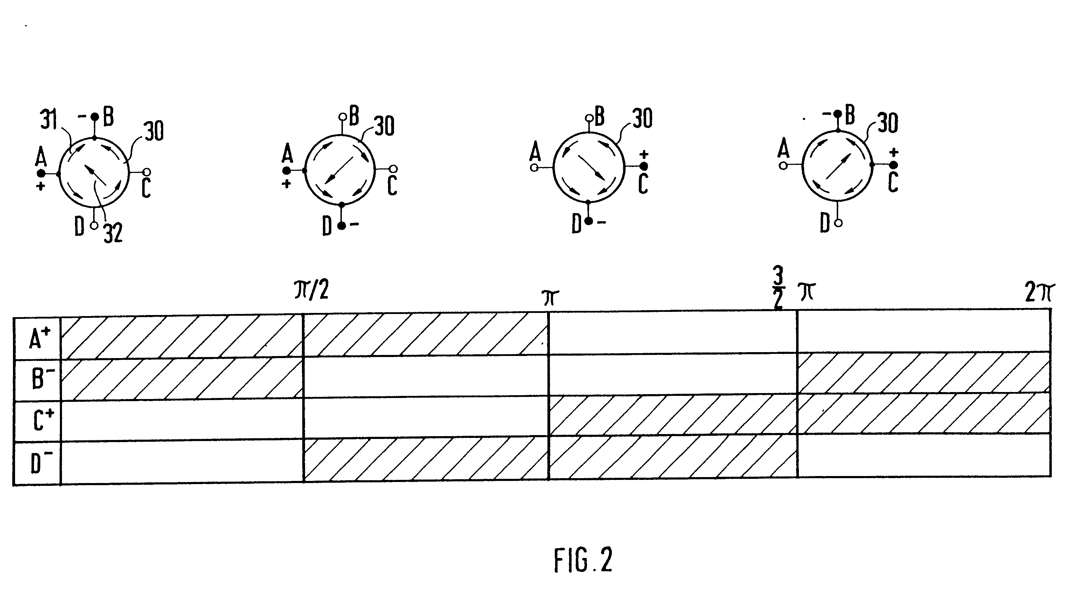

Fig. 2 dient zur Erläuterung der Schaltsequenz der Anordnung nach Fig. 1 bei einfacher Kommutierung. Der mit 30 bezeichnete Kreis kennzeichnet schematisch einen mit vier in Ringschaltung zusammengeschalteten Wicklungssträngen bewickelten Stator eines bürstenlosen Gleichstrommotors. Die mit A, B, C und D bezeichneten Punkte entsprechen den Punkten A, B, C und D in Fig. 1. Die mit 31 gekennzeichneten Pfeile in Umfangsrichtung geben die Stromflußrichtung in den einzelnen Strängen bei dem jeweiligen Schaltzustand der Halbleiterschalter wieder. Mit 32 ist ein aus dieser Stromverteilung resultierender Durchflutungsvektor bezeichnet. Ein ausgefüllter Anschlußpunkt A, B, C oder D steht für die Verbindung dieses Punktes mit der Versorgungsspannung bzw. mit der Masse.

Ein schwarzer Punkt bedeutet also stets, daß der entsprechende Halbleiterschalter geschlossen ist. Unterhalb der Zeile mit den Motoren 30 ist das Schema für die Schalterstellungen, bezogen auf einen elektrischen Winkel von 2 Pi, wiedergegeben. Schraffierte Flächen geben an, daß der entsprechende Schalter in diesem Winkelbereich geschlossen ist. Damit ergibt sich folgende Schaltsequenz: Erster Schritt: Die Schalter $A^+$ und $B^-$ sind geschlossen, die Schalter $C^+$ und $D^-$ offen. Eine aus den Strängen 13, 14 und 15 gebildete Serienschaltung liegt elektrisch parallel zum Strang 12. Die so entstehende Durchflutung erzeugt in Verbindung mit dem mit permanentmagnetischem Material belegten Rotor ein Drehmoment, welches dazu führt, daß sich der Rotor weiterdreht.

Zweiter Schritt: Die Schalter $A^+$ und $D^-$ sind geschlossen, der Durchflutungsvektor dreht sich um 90° weiter.

Dritter Schritt: Die Schalter $C^+$ und $D^-$ sind geschlossen, die Schalter $A^+$ und $B^-$ offen. Wieder dreht sich der Durchflutungsvektor um einen Winkel von 90° in mathematisch positiver Richtung.

Vierter Schritt: Die Schalter $C^+$ und $B^-$ sind geschlossen, die Schalter $A^+$ und $D^-$ offen. Nach Durchlaufen der gesamten Sequenz wird wieder beim ersten Schritt begonnen. An den mit 32 bezeichneten Durchflutungspfeilen in Fig. 2 erkennt man, daß durch diese Schaltsequenz ein Drehfeld erzeugt wird, welches den Rotor der Maschine antreibt. Der hier dargestellte Durchflutungsverlauf bezieht sich auf eine zweipolige Maschine, bei welcher ein elektrischer Winkel von 2 Pi einem Maschinenwinkel von 2 Pi entspricht. Bei höherer Polpaarzahl und gleicher Steuersequenz dreht sich der Rotor um einen elektrischen Winkel von 2 Pi oder um einen räumlichen Winkel von 2 Pi/$_p$ mit p gleich der Polzahl des Motors.

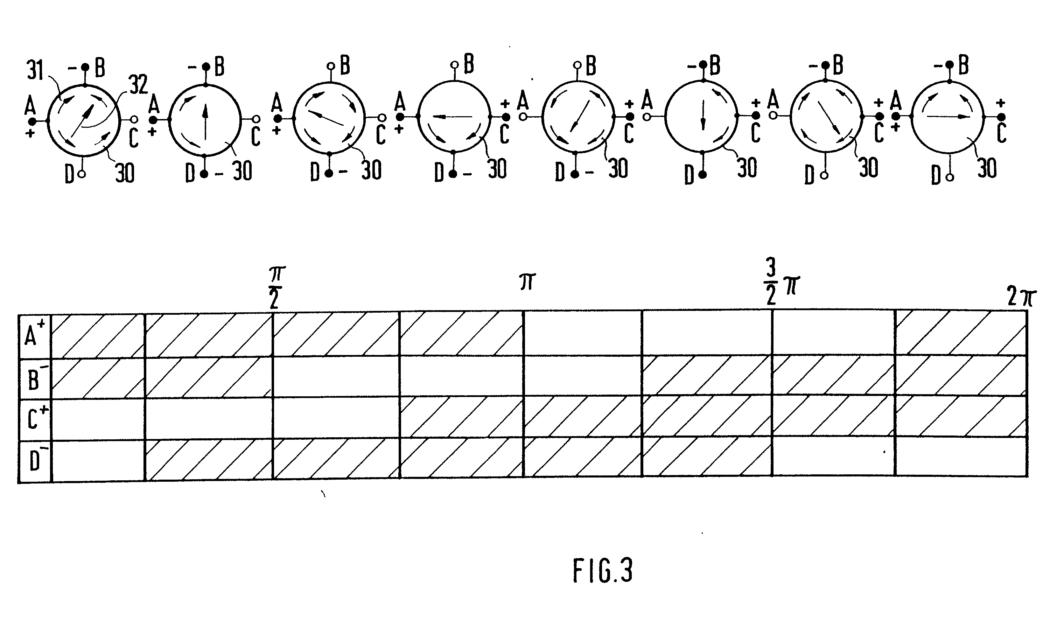

Die Anordnung nach Fig. 1 kann jedoch noch in einer anderen Art und Weise angesteuert werden. Eine Schaltsequenz, im folgenden doppelte Kommutierung genannt, wird mit Hilfe von Fig. 3 beschrieben. Die Zahl der schematisch dargestellten Motoren in der obersten Zeile von Fig. 3 ist doppelt so groß wie in Fig. 2. Bezeichnungen der Anschlüsse, des Stromflusses in den einzelnen Strängen und des resultierenden Durchflutungsvektors sind wie in Fig. 2. Aus dem darunter befindlichen Diagramm liest man die Schaltsequenz wie folgt ab:
Erster Schritt: Schalter $A^+$ und $B^-$ geschlossen, Schalter $C^+$ und $D^-$ offen,
zweiter Schritt: Schalter $A^+$, $B^-$ und $D^-$ geschlossen, Schalter $C^+$ offen,

dritter Schritt: Schalter $A^+$ und $D^-$ geschlossen, Schalter $C^+$ und $B^-$ offen,
vierter Schritt: Schalter $A^+$, $C^+$ und $D^-$ geschlossen, Schalter $B^-$ offen,
fünfter Schritt: Schalter $C^+$ und $D^-$ geschlossen, Schalter $A^+$ und $B^-$ offen,
sechster Schritt: Schalter $C^+$, $B^-$ und $D^-$ geschlossen, Schalter $A^+$ offen,
siebter Schritt: Schalter $C^+$ und $B^-$ geschlossen, Schalter $A^+$ und $D^-$ offen,
achter Schritt: Schalter $A^+$, $C^+$ und $B^-$ geschlossen, Schalter $D^-$ offen.

Nach Durchlaufen dieser Sequenz wird wieder mit dem ersten Schritt begonnen.

Vergleicht man die in Fig. 2 und Fig. 3 beschriebenen Schaltsequenzen miteinander, so sieht man, daß es in der Schaltsequenz nach Fig. 3, der doppelten Kommutierung, Schaltzustände gibt, in denen drei Schalter geschlossen sind. In der Schaltsequenz nach Fig. 2 sind immer nur zwei Schalter geschlossen. Mit beiden Schaltsequenzen wird auf elektronischem Wege ein Drehfeld erzeugt.

Auf eine detaillierte Beschreibung des Aufbaus der Statorwicklung sowie auf eine Beschreibung der Einzelheiten der Kommutierungslogik 18 und der Treiberschaltungen 19 wird an dieser Stelle verzichtet, da sie nicht Gegenstand der Erfindung sind.

## Ansprüche

1. Steuereinrichtung zur bipolaren Ansteuerung des Stators eines 4-strängigen bürstenlosen Gleichstrommotors, dessen Läufer mit wenigstens einem Polpaar eines permanentmagnetischen Materials belegt ist, mit Sensoren zur Erkennung der Rotorstellung und mit vier Schaltelementen, die abhängig von den Signalen der Sensoren schaltbar sind, **dadurch gekennzeichnet,** daß die vier Stränge der Ankerwicklung in Ringschaltung zusammengeschaltet sind und jeder zwischen je zwei Strängen liegende Verbindungspunkt mit einem Schaltelement verbunden ist.

2. Steuereinrichtung nach Anspruch 1, dadurch gekennzeichnet, daß zwei Schaltelemente je eine Verbindung zwischen Versorgungsspannung und Ankerwicklung und zwei Schaltelemente je eine Verbindung zwischen Masse und Ankerwicklung herstellen.

3. Steuereinrichtung nach den Anspruch 2, dadurch gekennzeichnet, daß die Schaltelemente Halbleiter-Leistungsschalter sind.

4. Steuereinrichtung nach den Anspruch 3, dadurch gekennzeichnet, daß die Halbleiter-Leistungsschalter bipolare Leistungstransistoren sind.

5. Steuereinrichtung nach den Anspruch 3, dadurch gekennzeichnet, daß die Halbleiter-Leistungsschalter Power-MOS-Transistoren sind.

6. Verfahren zum Betreiben der Steuereinrichtung nach den Ansprüchen 1 bis 5, dadurch gekennzeichnet, daß die Stränge der Statorwicklung unsymmetrisch bestromt werden.

7. Verfahren nach Anspruch 6, dadurch gekennzeichnet, daß jeweils drei Wicklungsstränge der Statorwicklung parallel zum vierten liegen.

8. Verfahren nach den Anspruchen 7, gekennzeichnet durch folgende Schritte:

a) Schalter $A^+$ und $B^-$ geschlossen, Schalter $C^+$ und $D^-$ offen

b) Schalter $A^+$ und $D^-$ geschlossen, Schalter $C^+$ und $B^-$ offen,

c) Schalter $C^+$ und $D^-$ geschlossen, Schalter $A^+$ und $B^-$ offen,

d) Schalter $C^+$ und $B^-$ geschlossen Schalter $A^+$ und $D^-$ offen.

9. Verfahren nach Anspruch 6, gekennzeichnet durch folgende Schritte:

a) Schalter $A^+$ und $B^-$ geschlossen, Schalter $C^+$ und $D^-$ offen,

b) Schalter $A^+$, $B^-$ und $D^-$ geschlossen, Schalter $C^+$ offen,

c) Schalter $A^+$ und $D^-$ geschlossen, Schalter $C^+$ und $B^-$ offen,

d) Schalter $A^+$, $D^-$ und $C^+$ geschlossen, Schalter $B^-$ offen,

d) Schalter $C^+$ und $D^-$ geschlossen, Schalter $A^+$ und $B^-$ offen,

f) Schalter $C^+$, $B^-$ und $D^-$ geschlossen, Schalter $A^+$ offen,

g) Schalter $C^+$ und $B^-$ geschlossen, Schalter $A^+$ und $D^-$ offen,

h) Schalter $A^+$, $C^+$ und $B^-$ geschlossen, Schalter $D^-$ offen.

FIG.1

$U_{Batt}$

J. Feigel 13-
20. 5. 88

EP 0 343 481 A2

| | π/2 | π | 3/2 π | 2π |
|---|---|---|---|---|
| A⁺ | ////// | ////// | | |
| B⁻ | ////// | | | ////// |
| C⁺ | | | ////// | ////// |
| D⁻ | | ////// | ////// | |

FIG.2

FIG.3

EP 0 343 481 A2

J. Feigeli3
20·5·88